(19) Europäisches Patentamt
European Patent Office
Office européen des brevets

(11) **EP 1 826 894 A1**

(12) **EUROPEAN PATENT APPLICATION**

(43) Date of publication:
**29.08.2007 Bulletin 2007/35**

(51) Int Cl.:
**H02M 3/158** (2006.01)

(21) Application number: **06425133.3**

(22) Date of filing: **28.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **STMicroelectronics S.r.l.**
**20041 Agrate Brianza (Milano) (IT)**
Designated Contracting States:
**DE FR GB IT**

(72) Inventors:
• **Zafarana, Alessandro**
  **20151 Milano (IT)**
• **Zambetti, Osvaldo**
  **20125 Milano (IT)**

(74) Representative: **Ferrari, Barbara**
**Botti & Ferrari S.r.l.,**
**Via Locatelli, 5**
**20135 Milano (IT)**

(54) **Method for controlling a multiphase interleaving converter and corresponding controller, in particular for a sudeen release of a load**

(57)    A method is described for controlling a converter of the multiphase interleaving type comprising the steps of:
- detecting when a change of the load applied to an output terminal of the converter occurs;

- simultaneously turning off all the phases of the converter; and
- recovering a driving interleaving phase shift for restarting a normal operation of the converter.

    A controller is also described for carrying out this method.

FIG. 5

**Description**

Field of application

The present invention relates to a method for controlling a multiphase interleaving converter.

The invention also relates to a controller suitable for carrying out this method.

The invention particularly, but not exclusively, relates to a method for controlling this converter of the multiphase interleaving type when a load connected to it is suddenly released and the following description is made with reference to this field of application just to simplify its illustration.

Prior art

As it is well known, the evolution of the electric features of the processors for PC, WORSTATION and SERVER obliges manufacturers to search new solutions to meet the requirements demanded by central process units or CPU (acronym for Computing Processing Unit).

In particular, CPUs of new generation require high precision in the supply voltage, equal for example to +/- 0.8% in the steady state and +/- 3% in the transient state.

Next to these requests for precision, the used supply voltages fall down to 1.1V and the load currents rise to 130 A with edges of 100 A/$\mu$s, with a request for efficiency higher than 80%.

Therefore, suitable current or voltage controller devices are to be used, which arc able to ensure the efficiency required. A controller device suitable for the applications with CPU comprises for example a converter of the DC-DC interleaving type, used as an economic and efficient solution to meet the above needs and obtained by connecting, in parallel, N DC-DC converters in a Buck or Step-down configuration, i.e. by connecting their input and output terminals to each other driven in interleaved mode.

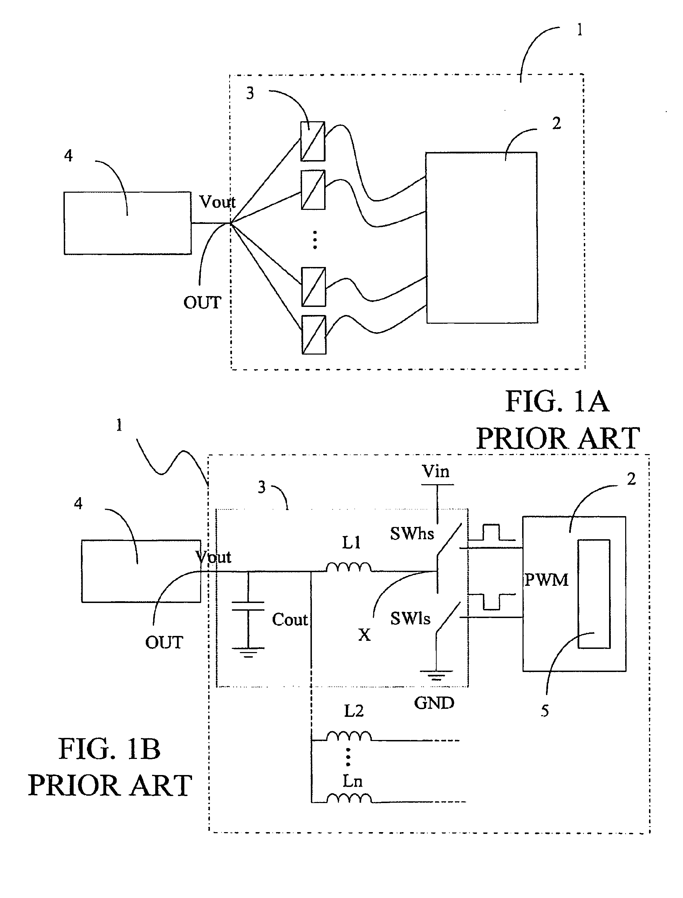

A similar converter of the DC-DC interleaving type is schematically shown in Figure 1, globally indicated with 1.

The converter 1 essentially comprises a controller 2 connected to a plurality of n buffers or phases 3 (multiphase configuration) essentially comprising pairs of switches, so called High Side and Low Side, driven by the controller 2 so as to supply a required power to a CPU 4, which is connected to the output terminal OUT of the converter 1.

The interleaving driving of the converter 1 also implies that the controller 2 turns of the High Side switches comprised in the n phases with a phase shift equal to the switch period T divided by the number n of phases.

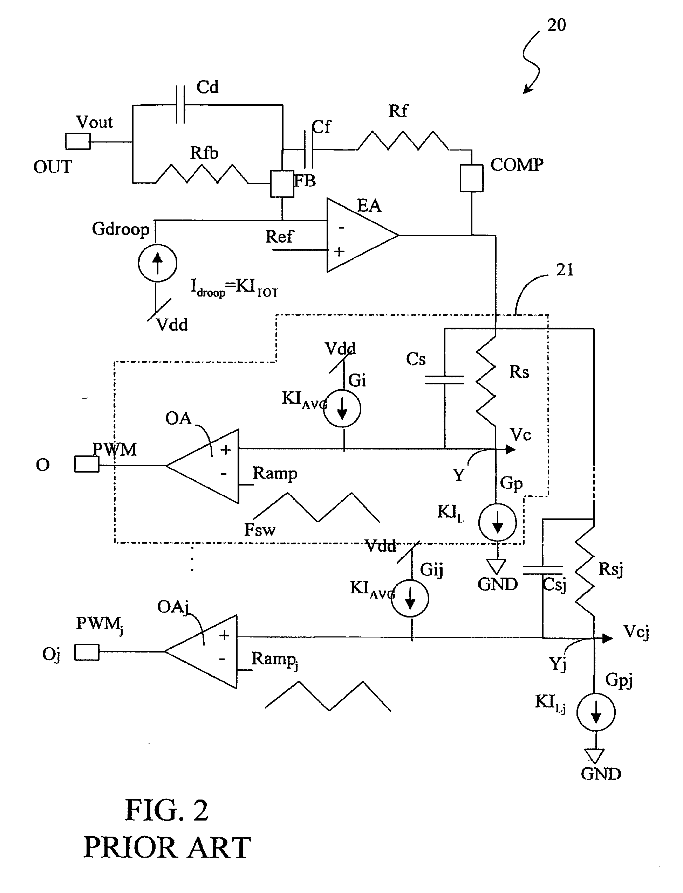

A multiphase interleaving converter 1 is shown in greater detail in Figure 2. In particular, the converter 1 comprises n phases (indicated in the figure simply by their inductors L1...Ln), each phase 3 comprising a High Side switch SWhs connected in series to a Low Side switch SWls between a first and a second voltage reference, in particular an input voltage Vin and a ground GND.

Each phase 3 also comprises an inductor L inserted between a switch node X, or phase node, intermediate between the switches SWhs and SWls and ground GND. The converter 1 also comprises an output capacitor Cout inserted between the output terminal OUT and the ground GND. Across the capacitor Cout there is an output voltage value Vout which is applied to the CPU 4.

The controller 2 supplies a driving signal of the PWM type for the High Side SWhs and Low Side SWls switches of the phases 3, which are sensitive to the level of the signal PWM, in particular the High Side switches and the Low Side switches being respectively on and off if PWM=1, vice versa the High Side switches and the Low Side switches being off and on respectively if PWM-0. To do this, the controller 2 comprises a suitable modulator 5.

In recent years, the processors have been required to have the current specifications summarised in the underlying table 1:

Table 1

|  | 2004A | 2004B | 2004C | 2005A | 2005B | 2006A |
|---|---|---|---|---|---|---|
| **IMAX** | **78A** | **119A** | **112A** | **100A** | **125A** | **65A** |
| **ISTEP** | 55A | 95A | 89A | 65A | 95A | 40A / 60A |
| **Istep/Trise** | 69A/ms | 119A/ms | 111A/ms | 217A/ms | 317A/ms | 1200A/ms |
| **IDCmin** | 5.9 | 5A | 5A | 5A | 5A | 5A |
| **ITDC** | **68A** | **101A** | **96A** | **85A** | **115A** | **56A** |
| **I_RISE** | 800nsec | 800nsec | TBD / 04_A | 310nsec | 310nsec | 50nsec |

It should be noted that the increase: of the required maximum currents (IMAX) stopped in 2005 and a decrease thereof is foreseen in 2006 passing from about 125A to 65A. Such a decrease of the required maximum current would lead towards converters designs using a lower number of phases with respect to the preceding years.

In parallel, a very strong increase of the current demand rate by the processors (Istep/Irise) occurs which complicates the design of these DC-DC interleaving converters a lot: the rate value Istep/Irise passes in fact from 69A/ms (value of 2004) to the foreseen value 1200A/ms of 2006.

In other words, DC-DC interleaving converters of the next generation are required to meet more and more sudden load changes (so called Load Transients). This need is also present in the case of a fast releasing of such load.

All this implies an increase of the costs of these converters for which the number of output capacities Cout and thus the number n of phases of the converter itself is to be increased to respect the required voltage tolerances.

In particular, if up to now the number n of phases has been decided on the basis of efficiency, temperature of the components (i.e. reliability) and power density requirements, in the next years the number of phases will be established also on the basis of the required current speed specifications to be respected.

Increasing the number of phases is in fact a way to increase the response speed of the converter to the load request, in particular to the sudden decreases of such requests when the load is released.

Clearly, in the case of current changes equal to 70A in a range of 50ns, only an adequate number of ceramic capacities can limit the voltage fall of the processor in the first 50ns of the load transient.

It is in fact reminded that the regulator has a band, which is proportional to n x Fsw, being n the number of phases of the converter and Fsw the switching frequency of the same, in general about 300KHz. Thus, there are obtained response times which are in inverse proportion to the band (for example, for n=4 a response time of about 800ns is obtained).

The converter and its response speed can thus heavily influence the manufacturing cost of the same and the number of electrolytic capacities to he used (which influence the output voltage fall for the processor over longer times than for the ceramic capacities).

It is also worthwhile underlining the fact that the band and response speed of the converter are however two indexes that no longer function for load transients short as 50ns, which cannot be considered a "small signal" shifting any more since the reaction times of the closed loop system (i.e. the band) are greater at least of one order of magnitude.

The solutions proposed by the prior art aim at improving the response times of the controller without for this reason influencing its band.

An example of this known type of solution is schematically shown in figure 2, globally indicated with 20.

The controller 20 has an terminal OUT for its connection with a CPU (not shown), whereon there is a voltage signal Vout. The terminal OUT is connected to a first inner terminal FB by means of a resistor Rfb and it comprises an error amplifier EA having a first input terminal, in particular an inverting one, connected to the first inner terminal FB as well as a first current generator Gdroop suitable for supplying this first input terminal of the error amplifier EA with a voltage value Idroop equal to $K*I_{TOT}$, being K a suitable scale factor and $I_{TOT}$ a total current value flowing in the inductors of the phases of the converter which the controller 20 is connected to.

The error amplifier EA has a second input terminal, in particular a non inverting one, receiving a reference voltage Rif, as well as an output terminal connected to a second inner terminal COMP of the controller 20, which is, in turn, feedback connected to the first inner terminal FB by means of the series made of a resistor Rf and of a capacitor Cf.

The second inner terminal COMP is connected to a plurality of control modules 21, in parallel to each other, and each having an output terminal O connected to a phase of the converter.

In particular, each control module 21 is inserted between a first and a second voltage reference, in particular a supply voltage Vdd and a ground GND, and it is connected to the second inner terminal COMP.

A generic control module 21 comprises a resistor Rs and a capacitor Cs which are inserted, in parallel to each other, between the second inner terminal COMP and an inner node Y of the module itself, which is in turn connected to the ground GND by means of a biasing generator Gp, supplying a current value equal to $K*I_L$, wherein K is the scale factor and $I_L$ is a value of the current flowing in the inductor L of the phase that is connected to the control module 21.

In parallel to the capacitor Cs, the control module 21 comprises an input generator Gi, which is inserted between the supply voltage reference Vdd and the inner node Y and is suitable for supplying a current value equal to $K*I_{AVG}$, wherein K is the scale factor and $I_{AVG}$ is a mean value of the currents flowing in the inductors L of the phases of the converter.

The inner node Y is also connected to a first input terminal, in particular non a inverting one, of an operational amplifier OA of the control module 21, having in turn a second input terminal, in particular a inverting one, which receives a ramp signal RAMPA (having frequency Fsw) and an output terminal O, which is connected to a corresponding phase of the converter and supplies this phase with a driving signal PWM.

To improve the response times of the controller 20, without modifying its band, a supplemental capacitor Cd is inserted between the first inner terminal FB and the terminal OUT, in parallel to the resistor Rfb.

In this way, when there is a particularly quick Load Transient, this supplemental capacitor Cd becomes a much smaller impedance than the resistor Rfb resulting in the voltage value at the first inner terminal FB being no more latched at a value equal to the reference voltage Ref (virtual ground thanks to the gain of the error amplifier EA) but it is dragged by the voltage signal Vout at the terminal OUT of the controller 20. The output terminal of the error amplifier EA, corresponding to the second inner terminal COMP, thus suddenly rises upwards with a speed proportional to the parameter GBWP [Gain Bandwidth Product] of the error amplifier EA and it saturates beyond the height of the driving signals PWM produced by the control modules 21.

In Figure 2, the index j indicates the different phases of the converter connected to the controller 20, which, as previously described, comprise a High Side switch SWhs, inserted between an input voltage Vin and a switch node X, also called phase node, and a Low Side switch SWls, inserted between the phase node X and the ground GND, as well as an inductor L, inserted between the phase node X and the terminal OUT of the converter 1 whereon there is an output voltage value Vout, as well as a capacitor Cout inserted between the terminal OUT and the ground GND.

The driving signals PWM set the turn on and off times of the switches SWhs and SWls. In particular, when the driving signal PWM is at a high value, or "1", then the High Side switch SWhs is closed and the Low Side switch SWls is open. In a dual way, if the driving signal PWM is at a low value, or "O", then the switch High Side SWhs is open and the switch Low Side SWls is closed.

It is to be noted that, thanks to the configuration of the controller 20 shown in Figure 2, the current $I_L$ flowing in each inductor L of each phase of the converter is read by the controller 20 through the scale factor K.

Although advantageous under several aspects, this known solution shows two important problems:

1) even if the controller 20 provides to realise a sudden and quick movement of the inner terminal COMP (further to a Load Transient), each phase responds in reality only marginally to this Load Transient and does not completely contributes to sustain the voltage value Vout required in output due to the presence of the interleaving phase shifts of the phases themselves.

2) the speed with which the inner terminal COMP moves (function of the parameter GBWP of the error amplifier EA) influences the speed at which the phases driven by the controller 20 are turned on or turned on again further tu a Load Transient.

Problem 1) can be Immediately linked to the choice of the time constant of the controller 20, which is equal to Cd*Rfp where:

- the value of the resistor Rfb is chosen so as to program a desired droop effect, i.e. a departure of the voltage signal Vout from a value of the reference given by K*$I_{TOT}$*Rfb, K being generally chosen so as to determine a maximum value possible of supplied current; and
- the value of the supplemental capacitor Cd chosen is as high as possible so as to reduce the impedance of the parallel between it and the resistor Rfb in the case of a Load Transient.

However if the value of the supplemental capacitor Cd is to high, its derivative action also occurs in the steady state, i.e. in the absence of a Load Transient, by substantially amplifying the ripple of the voltage Vout (which is a signal with a value equal to about 10mV and recurring at frequency n*Fsw, n being the number of phases of the converter. If this occurs, the converter becomes unstable.

In other words, for a correct operation of the controller 20 the following relation is always to be respected:

$$1/2\pi Rfb*Cd > n*Fsw$$

being

Rd        the resistance value of the resistor Rd;

Cd        the capacity value of the capacitor Cd; and

n*Fsw    the frequency of the signal Vout.

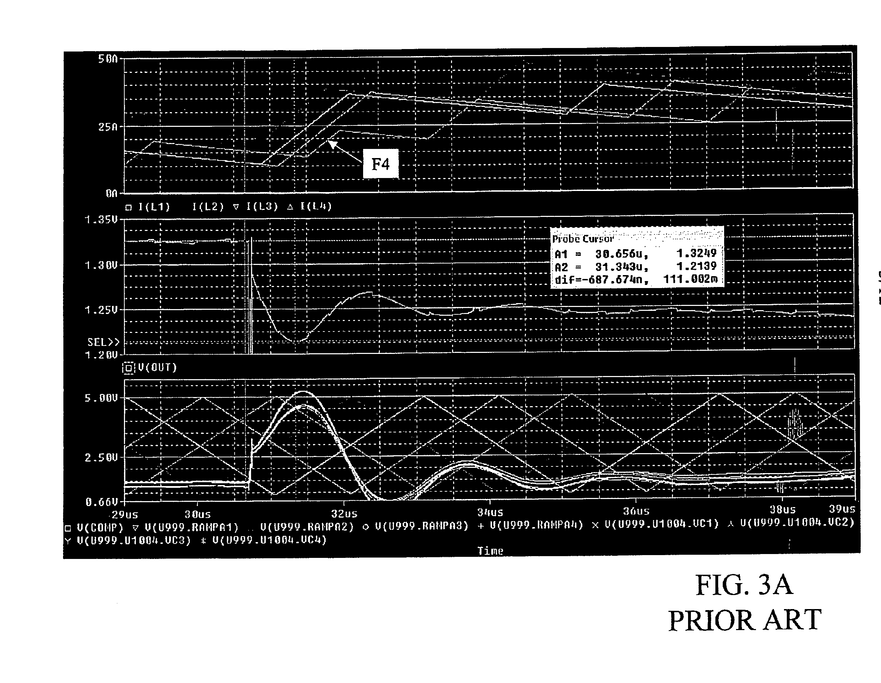

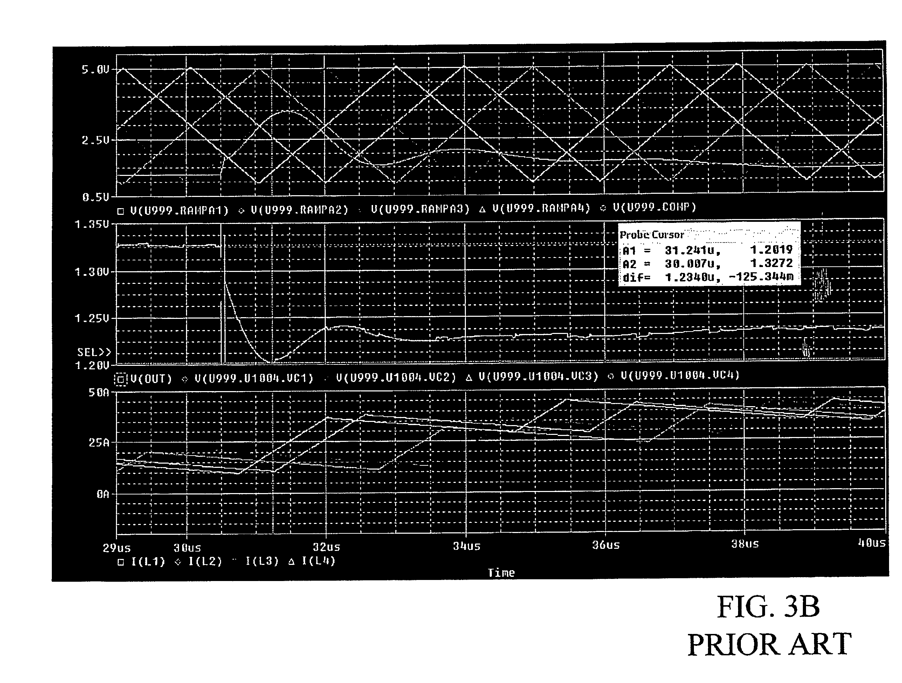

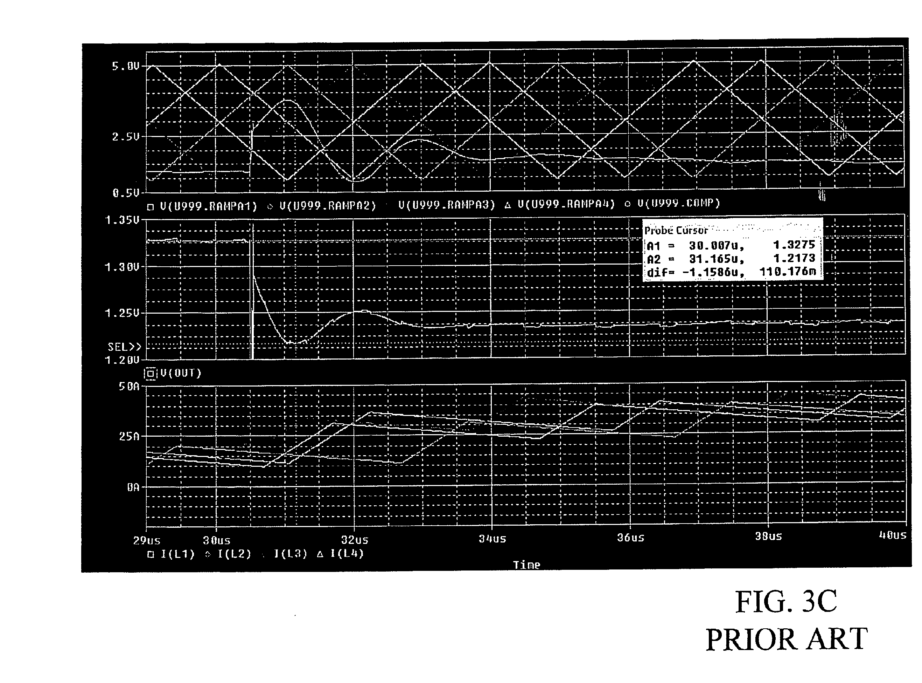

All this limits the movement of the inner terminal COMP for which each phase with a driving signal PWM higher than a control voltage in the instant when there is a Load Transient is only marginally turned on, as schematically shown in Figure 3.

In particular, in this figure it is noted how the current of the inductor of the phase F4 is only marginally interested by the Load Transient: only three phases ouL of four thus contribute to the rise of the output voltage value Vout. This situation is valid in a general way: only n-1 phases respond to a current change associated with a Load Transient, at least one phase remaining "lazy".

The problem 2) is instead associated with the repeatability of the parameter GBWP of the error amplifier EA of the controller 20. It is in fact known that this parameter GBWP depends on a great number of technological parameters such as oxide thickness, lithographic tolerances, diffusivity of dopants etc. Apart from the variance with the junction temperature, a departure of at least +/-50% from a nominal value of the parameter GBWP of an amplifier is a realistic situation.

Thus, considering an error amplifier EA with nominal GBWP of 30MHz (which corresponds to a value of AO equal to 100dB and to a pole at 300Hz), practically, the value of the parameter GBWP could vary between 15MHz and 45MHz.

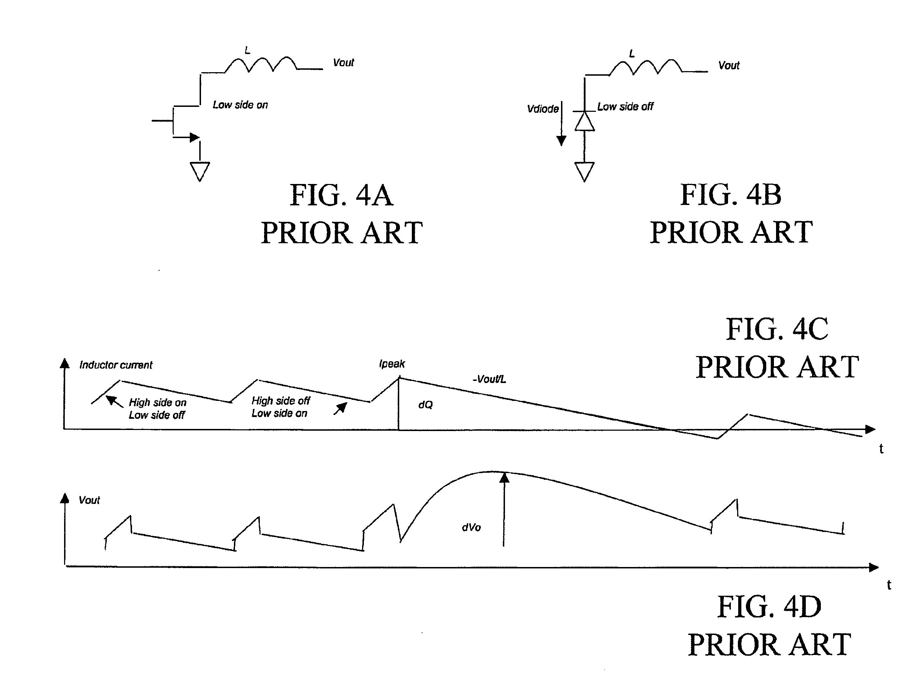

By repeating the simulations on a controller 20 of the known type with error amplifiers EA having the two extreme values indicated above for the parameter GBWP, the patterns shown in Figures 4A and 4B, respectively, are obtained, which highlight the dependency of the change of the output voltage Vout on the real value of the parameter CBWP of the error amplifier EA.

It thus occurs that, if fur GBWP=45MHz three phases out of four respond to the Load Transient, for GBWP=15MHz, only two phases out of four respond to the same Load Transient. Thus the fall value of the output voltage Vout of the converter passes from 110mV (with GBWP of 45MHz) to 125mV (with GBWP of 15MHz).

Moreover, the known solution shown has no control during the load release step and it is not able to "follow" sudden decreases of the current requests under these release conditions with the production of undesired overshoots of the output voltage value.

To try and solve this problem, a technique called "body-brake" has been recently proposed which is used in case of release of the load itself and is described for example in Us patent No. 6,806,689. A method for controlling a converter of the multiphase interleaving type using the body-brake technique provides that under load release conditions, all the High Side and Low Side switches are turned off (while traditionally, i.e. in the case of controllers which do not use this body-brake technique, the controller would turn off the High Side switches but would turn on the Low Side switches SWIs).

In this way the overshoot of the output voltage Vout further to the load release is strongly decreased with respect to controllers which do not use this body-brake technique. In fact, the excess of charge dQ generated by the cancellation of the currents of the inductors L of the multiphase interleaving converter phases is decreased thanks to the presence of Low Side switches being off.

In particular, it is immediate to verify that, in case traditional controllers are used, this charge excess is equal to:

$$dQ = L/Vout*Ipeak$$

Ipeak being a value of residual current in the inductances L of the converter phases, the voltage fall across these inductors L being equal to the output voltage Vout.

On the contrary, by using the body-brake technique, the voltage fall across the inductors L is equal to Vout+Vdiode, Vdiode being the voltage value across the intrinsic diode of the Low Side switches under the off condition.

Thus, the fall across the inductors L is decreased thanks to the voltage fall on these intrinsic diodes and the charge excess is given by:

$$dQ= L/(Vout+Vdiode)*Ipeak.$$

Thanks to this decrease of the charge excess dQ a decrease of the overshoot of the output voltage Vout is obtained.

The on and off conditions of the Low Side switches are schematically shown in Figures 4A and 4B and the corresponding patterns of the current values in the inductors of the phases and of the output voltage are qualitatively shown in Figures 4C-4E.

In particular, it is known to detect the load release condition by comparing a control voltage Vcntr (corresponding to an output voltage value of the error amplifier EA, i.e. the voltage value COMP) with a reference voltage Vr as well as with a clamping voltage Vclamp of the body-brake.

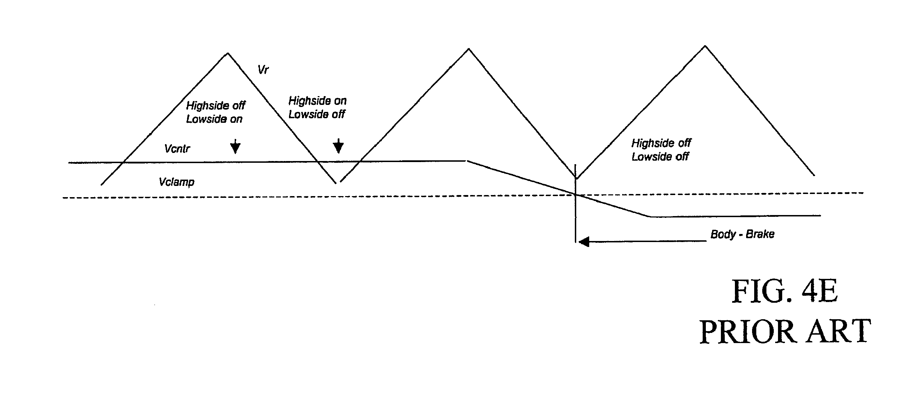

Normally, the reference voltage Vr has a ramp or sawtooth periodical wave form, as schematically shown in Figure 4E. The turn-on (ON) and the turn-off (OFF) of the High Side and Low Side switches is then decided according to the following rules:

if Vctr>Vr then High Side ON and Low Side OFF;

if Vctr<Vr and Vcntr>Vclamp then High Side OFF and Low Side ON; and

if Vctr<Vr and Vcntr<Vclronp then High Side OFF and Low Side OFF, this latter condition corresponding to the body-brake technique.

The technical problem underlying the present invention is that of providing a control method, and a corresponding controller, for a converter of the multiphase interleaving type having such structural and functional characteristics as to ensure that the output voltage value follows also sudden load decreases, overcoming in this way the limits and the drawbacks still affecting the converters realised according to the prior art.

Summary of the invention

The solution idea underlying the present invention is that of forcing the multiphase interleaving converter phases so that all respond to a load transient at the same time, in particular under a release condition of the same, substantially interrupting and recovering the interleaving driving mechanism.

On the basis of this solution idea the technical problem is solved by a method for controlling a converter of the multiphase interleaving type having the characteristics of claim 1.

The problem is also solved by a converter of the multiphase interleaving type having the characteristics of claim 6.

The characteristics and the advantages of the control method and of the controller for a converter of the multiphase interleaving type according to the invention will be apparent from the following description of embodiments thereof given by way of indicative and non limiting example with reference to the annexed drawings.

Brief description of the drawings

In these drawings:

Figures 1A and 1B schematically show a converter of the multiphase interleaving type realised according to the prior art;

Figure 2 schematically shows a controller comprised in a converter of the multiphase interleaving type realised according to the prior art;

Figures 3A-3C schematically show the patterns of signals inside a converter of the multiphase interleaving type realised according to the prior art under different operation conditions;

Figures 4A-4E schematically show equivalent circuits and patterns of signals inside a converter of the multiphase interleaving type realised according to the prior art using the body-brake technique

Figure 5 schematically shows a controller for a converter of the multiphase interleaving type realised according to the invention;

Figure 6 shows in greater detail a detail of the controller of Figure 5;

Figure 7 shows in greater detail the controller of Figure 5;

Figures 8A-8C schematically show the patterns of signals inside the controller of Figure 5; and

Figure 9 schematically shows an inner configuration of the controller of Figure 5.

Detailed description

The present invention starts from the consideration that the problems of response to sudden load changes (hereafter indicated as Load Transients) applied to a converter of the multiphase interleaving type are mainly linked to the interleaving driving mechanism which shifts the response of the single phases of the converter, phase shift which is an obstacle against a quick response of the converter itself. In particular, it has been considered how the ideal response to a Load Transient by the converter is that in which all the phases respond at the same time and how exactly the interleaving phase shift adopted for the driving of the phases does not allow their simultaneous turn-off.

Advantageously according to the invention, a method is proposed for controlling a converter of the multiphase interleaving type essentially comprising the steps of:

1) detecting when a load change applied to an output terminal of the converter (a so called Load Transient) occurs, in particular a release condition of the same;

2) simultaneously turning off all the phases of the converter, in particular zeroing the temporal phase shift of the interleaving driving;

3) recovering the phase shift of this interleaving driving, so as to restart a normal operation of the converter.

In particular, the step of detecting the Load Transient comprises a step of detecting the positive derivative of the voltage signal Vout at the output terminal of the converter and a step of generating a detection impulsive signal LTPULSE in correspondence with the Load Transient as detected.

Advantageously according to the invention, in accordance with the technique which is known as of body-brake, the step of simultaneously turning off all the converter phases comprises a step of simultaneously turning off all the power transistors of the phases.

In substance, the step of turning off the phases forces the conditions in which the High Side switches of the phases are OFF, and, contrary to the converters realised according to the prior art, also the Low Side switches of the phases arc OFF.

In a preferred embodiment, the control method according to the invention also comprises a regulation step of this detection impulsive signal LTPULSE.

Moreover, the step of simultaneously turning off all the phases of the converter comprises, in particular, a step of generating a turn-off control signal LowsideOff applied to all the phases and generated by means of a comparison of a control voltage signal PWM of a phase or an inner voltage signal COMP of the converter with a control signal RAMPA_ BOOST, this control signal RAMPA_BOOST being brought to a predetermined voltage value, in particular corresponding to a value of an inner voltage reference of the converter, for example a supply voltage reference Vdd, in correspondence with the detection impulsive signal LTPULSE.

Finally, the step of recovering the interleaving driving phase shift provides a comparison step of the OR type between the turn-off control signal LowsideOff and the driving signal PWM of each phase, the recovery of the normal operation of the converter thus occurring in an automatic way once the turn-off control signal is ended.

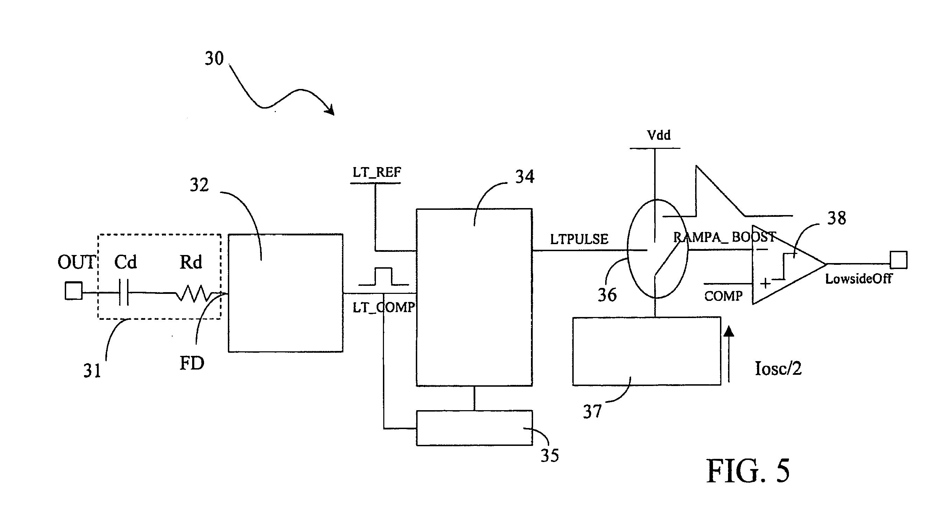

The method for controlling a converter of the multiphase interleaving type according to the invention is realised by means of a controller, schematically shown in Figure 5 and globally indicated with 30.

Advantageously according to the invention, the controller 30 comprises a Load Transient detector 32 having an input terminal FD connected, by means of a network 31 comprising the series of a capacitor Cd and of a resistor Rd, to an OUT terminal of the converter of the multiphase interleaving type for the connection for example with a CPU.

The Load Transient detector 32 has an output terminal LT_COMP connected to a flip-flop 34, having in turn an input terminal connected to an inner voltage reference, LT_REF, and all output terminal suitable for supplying a switch 36 with a detection signal LTPULSE. By way of illustration, hereafter reference will be made to the signals and to the terminals whereon these signals are present by using the same references.

The switch 36 is inserted between a supply voltage reference Vdd and an oscillator 37, suitable for supplying a current signal, Iosc/2 and it has an output terminal RAMPA BOOST connected to a first input terminal, in particular an inverting one, of an output comparator, having in turn a second input terminal, in particular a non inverting one, receiving a signal COMP, corresponding to the signal at the homonymous inner terminal of the multiphase interleaving converter, as described in connection with the prior art, and an output terminal LowsideOff.

The controller 30 finally comprises a regulation circuit 35 connected to the Load Transient detector 32, in particular to the terminal LT_COMP, and to the flip-flop 34.

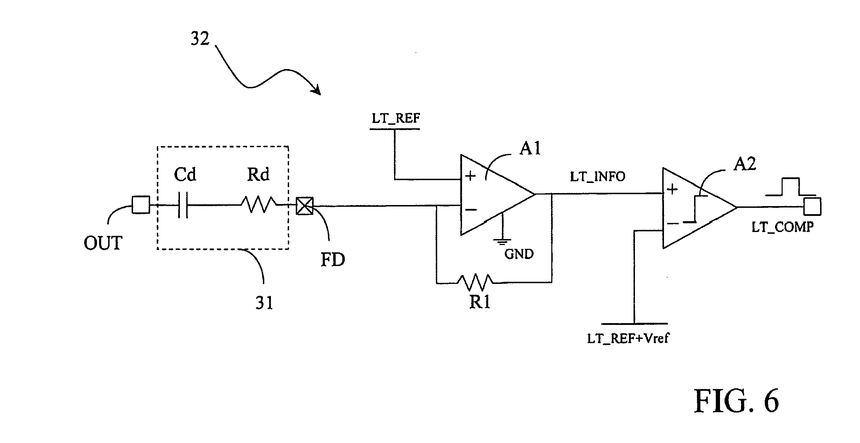

More in particular, as schematically shown in Figure 6, the Load Transient detector 32 comprises an input amplifier A1, in particular an operational amplifier, connected to the ground GND, having a first input terminal, in particular a non inverting one, connected to the inner voltage reference LT_REF, a second input terminal, in particular an inverting one, connected to the terminal FD and thus, through the network 31, to the terminal OUT, as well as an output terminal, LT_INFO, feedback connected to the second input terminal through a resistor R1.

The Load Transient detector 32 also comprises an output amplifier A2, in particular a threshold comparator, having a first input terminal, in particular a non inverting one, connected to the output terminal LT_INFO of the input amplifier A1, a second input terminal, in particular an inverting one, connected to a voltage reference equal to the inner voltage reference LT_REF summed with a "neat" triggering voltage Vref of the threshold comparator A2, as well as an output terminal, LT_COMP.

In substance, the Load Transient detector 32 is a threshold deriving circuit wherein the input amplifier A1 detects the derivative of the voltage signal Vout at the terminal OUT of the controller 30 through the network 31 comprising the resistor Rd and the capacitor Cd connected to the terminal FD, the value of the inner voltage reference LT_REF determining the triggering of the output amplifier A2 in correspondence with the detection of the positive derivative of the voltage signal Vout.

It is also possible to introduce, into the Load Transient detector 32, two output amplifiers having respective input terminals connected to inner voltage references chosen so as to cause their triggering on the detection of the positive, respectively negative, derivative of the voltage signal Vout.

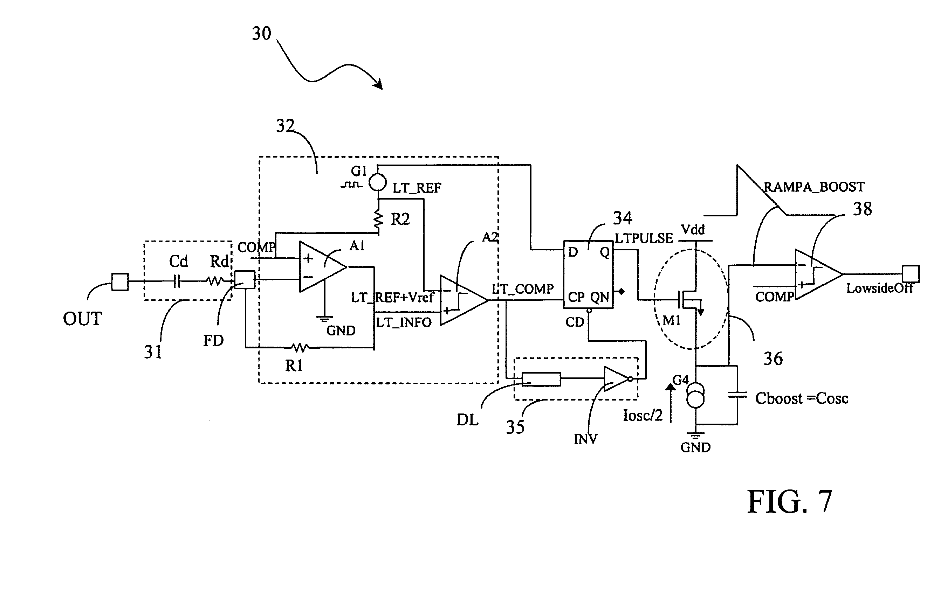

A preferred embodiment of the controller 30 is shown in greater detail in Figure 7.

As already seen, the controller 30 has a connection terminal OUT, for example with a CPU, connected, by means of the network 31 composed of the capacitor Cd and of the resistor Rd, to the terminal FD, in turn connected to the Load Transient detector 32.

In particular, the Load Transient detector 32 comprises the amplifier A1 having a first input terminal, a non inverting one, connected, by means of a resistor R2 to a first generator G1 of the inner voltage reference LT_REF, a second input terminal, an inverting one, connected to the terminal FD and an output terminal. The first generator G1 is connected between a first input terminal D of the flip-flop 34 and a first input terminal, an inverting one, of the comparator A2, a second input terminal, a non inverting one, connected to the output terminal of the amplifier A1 and an output terminal suitable for supplying a signal LT_COMP connected to a second input terminal CP of the flip-flop 34, as well as to the regulation circuit 35. In particular, the first input terminal of the comparator A2 receives a voltage value equal to the sum of the inner voltage reference LT_REF and of a triggering voltage Vref equal to G1*R2.

In substance, the value of the voltage supplied by the first generator G1 determines the triggering threshold of the output amplifier A2 and a sign change thereof allows to perform this triggering upon detection of the positive, respectively negative, derivative of the voltage signal Vout.

The regulation signal 35 comprises a delay element DL inserted between the output terminal of the comparator A2 and an inverter INV, in turn connected to a control terminal CD of the flip-flop 34, having in turn at least one output terminal Q suitable for supplying the switch 36 with the detection impulsive signal LTPULSE.

The switch 36 comprises a transistor M1 having a first conduction terminal connected to a supply voltage reference Vdd, a second conduction terminal connected to a current generator G4, in turn connected to the ground GND and a control terminal connected to the output terminal Q of the flip-flop 31. Moreover, a capacitor Cboost is inserted, in parallel to the current generator G4, between the second conduction terminal of the transistor M1 and the ground GND.

The interconnection point between the transistor M1 and the capacitor Cboost is also connected to a first terminal, a inverting one, of the output comparator 38, having a second input terminal receiving the signal COMP, as well as an output terminal suitable for supplying the turn-off control signal LowsideOff.

The transistor M1, the current generator G4 and the capacitor Cboost generate a control signal RAMPA_ BOOST having the form indicated in the figure, applied to the first input terminal of the output comparator 38. In particular, the control signal RAMPA_BOOST is brought to a value corresponding to the supply voltage in correspondence with a pulse of the impulsive signal LTPULSE supplied by the flip-flop 34.

Advantageously according to the invention, as already previously described, the Load Transient detector 32 is only sensitive to the positive derivative of the voltage signal Vout at the terminal OUT of the controller 30. In particular, when the comparator A2 triggers further to the detection of the derivative of the voltage signal Vout, the flip-flop 34 creates a detection impulsive signal LTPULSE which closes the switch 36, enhancing in this way the control signal RAMPA_BOOST to the supply voltage value Vdd.

Moreover, the detection impulsive signal LTPULSE generated by the flip-flop 34 is regulated by the delay introduced by the delay element DL of the regulation circuit 35.

As already seen in connection with the prior art, not to derive also the residual ripple of the signal Vout (which is a signal with frequency equal to N*Fsw), the network 31 is sized so as to respect the relation:

$$1/2\pi Rd*Cd > j*Fsw$$

being

Rd       the resistance value of the resistor Rd;
Cd       the capacity value of the capacitor Cd; and
N*Fsw    the frequency of the Vout signal.

The ripple of the output voltage signal Vout is about 10mV peak-peak, while the voltage drop DVout further to a Load Transient is about 100mV. Moreover, in case of a Load Transient, it is so quick as to consider the impedance associated with the capacitor Cd of the network 31 almost void. Thus, considering that the current value Id flowing through the resistor Rd is equal to Id=DVout/Rd, it is possible to size the resistor Rd so that the following relation occurs:

$$DVout/Rd \times Rdd > Vref$$

being

Rdd   the resistance value of the feedback resistor; and

Vref the "neat" triggering voltage value of the comparator A2 (equal to G1*R2, with reference to Figure 7).
Thus it is obtained that the resistance value of the resistor Rd must respect the relation:

$$Rd < DVout \times Rdd/Vref$$

In substance, the detection impulsive signal LTPULSE is generated by the flip-flop 34 in the case of a quick load decrease, the controller 30 realising in this way the step of detecting the Load Transient, in particular of the load release.
In fact, when the comparator A2 of the Load Transient detector 32 triggers further to the detection of the positive derivative of the output voltage signal Vout, the flip flop 32 generates an impulsive signal LTPULSE as small as desired, regulated by the delay element DL of the regulation circuit 35. This impulsive signal LTPULSE, applied to the control terminal of the switch 36, closes it and forces the signal RAMPA_BOOST to rise to the supply voltage value Vdd.
Advantageously according to the invention, the turn-off control signal LowsideOff turns off all the Low Side switches in the phases of the converter connected to the controller 30. In this way, the controller 30 exploits the body-brake technique at the detection of a sudden load decrease, i.e. at the detection of the positive derivative of the output voltage Vout.
The turn-off control signal LowsideOff is generated for a time interval corresponding to the condition:

$$RAMPA\_BOOST > COMP$$

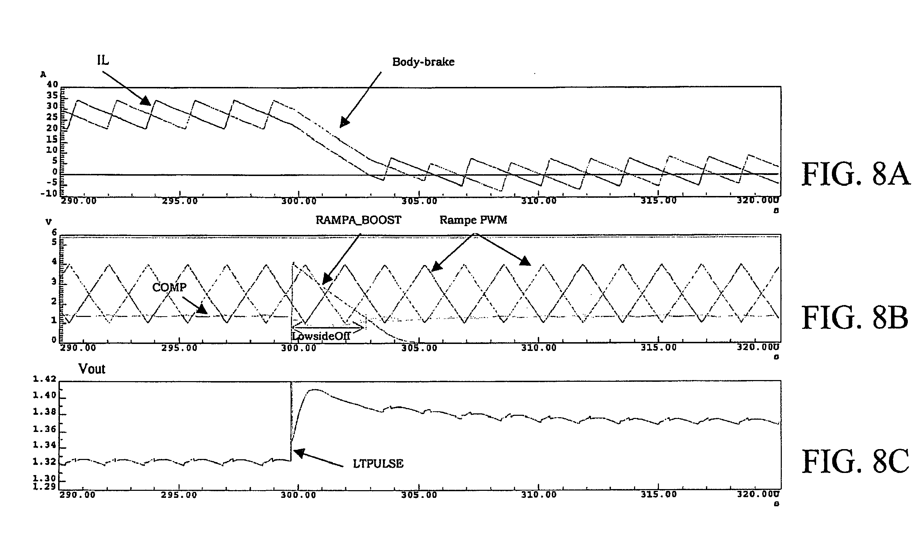

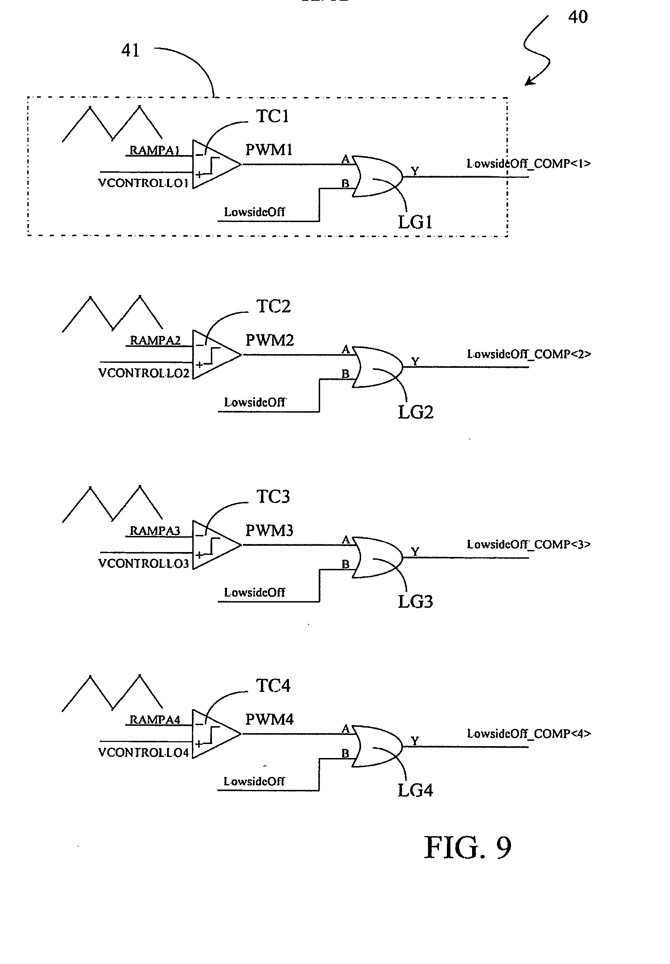

imposed by the output comparator 38 which receives these signals on its input terminals, as shown in Figures 8A-8C where the patterns of the current signals IL of the inductances of the phases (Figure 8A), the voltage values inside the controller 30 (Figure 8B) and the pattern of the output voltage signal Vout (Figure 8C) are reported.
In particular, further to the generation of the detection impulsive signal LTPULSE, the voltage across the capacitor Cboost (suitably chosen with values equal to a capacity Cosc used for generating the triangular ramps of the control voltage signals PWM of the phases of the converter connected to the controller 30) is brought to the reference voltage value The output comparator 38 thus generates a turn-off control signal LowsideOff of the impulsive type, comparing the control voltage signal PWM of a phase or the voltage signal COMP applied to its second input terminal with the control signal RAMPA_BOOST applied to its first input terminal. The duration of the turn-off control signal LowsideOff depends on the controller 30 i.e. on the control voltage, which, during a negative Load Transient, i.e. in correspondence with a load release, tends to decrease. In fact, the turn-off control signal LowsideOff is the signal of the output terminal of the comparator 38; this comparator 38 compares the control signal RAMPA_BOOST with the voltage signal COMP, which is in turn the signal of the output terminal of the controller, i.e. the value of the control voltage. This control voltage is substantially a signal carrying the information about the amount of energy to be transferred from the input terminal to the output terminal of the converter. The dependency of the duration of the turn-off control signal LowsideOff from the control voltage thus allows to control the energy transferred by the converter.
The turn-off control signal LowsideOff generated by the controller 30 is used to simultaneously turn off the High Side and Low Side switches of all the phases of the converter connected to the controller 30, cancelling the interleaving phase shift of the driving of these phases and using the body-brake technique, in particular through a plurality of signals PWM_COMP generated by a driving architecture OR, schematically shown in Figure 9, globally indicated with 40.
The driving architecture 40 shown in Figure 9 relates, as non limiting example, to the case of four phases for which it generates four driving signals, PWM_COMP<1>... PWM_COMP<4>. It comprises a plurality, in the example four, of driving sub-systems 41, each comprising a threshold comparator TC having a first input terminal, an inverting one, receiving a ramp signal RAMPA of the relative phase, a second input terminal, a non inverting onc, receiving a control voltage signal VCONTROLLO and an output terminal suitable for supplying a first input terminal A of a logic gate LG of the OR type with a signal PWM, the logic gate having a second input terminal B receiving the turn-off control signal LowsideOff and an output terminal Y suitable for supplying the real turn-off control signal LowsideOff_COMP.

In this way, the simultaneous turn-off of the phases occurs by realizing an Or of the signals PWM and the turn-off control signal LowsideOff in OR thanks to the architecture 40.

Considering that the ramp signals (RAMPA1...RAMPA4) are constructed by charging and discharging a capacity Cosc with a current Iosc, then the control signal RAMPA_BOOST is advantageously created with a slope equal to half the isosceles-triangle-shaped ramps of the driving signals PWM. In particular, the ramp signals RAMPA1...RAMPA4 are isosceles-triangle-shaped ramps which, compared with the control voltage signals VCONTROLLO1...VCONTROLLO4 create driving signals of the PWM type by means of the comparators TC1...TC4.

Advantageously according to the invention, the controller 30 thus comprises a capacitor Cboost with a capacity value equal to Cosc and current generator G4 of the oscillator 37 supplies a discharge current equal to Iosc/2.

It is to be underlined that the fact that the slope of the control signal RAMPA_BOOST is chosen being equal to half the ramps of the driving signals PWM ensures continuity in the control action of the controller 30. All this is mathematically equivalent to non varying the loop gain of the overall system comprising the controller 30 ad the corresponding converter.

At this point, the recovery of the interleaving phase shift is to be provided for the driving of the phases during the normal operation of the converter.

Advantageously, by using the controller 30 according to the invention the recovery of the interleaving phase shift is automatic since it has never been interrupted. In particular, when the turn-off control signal LowsideOff ends, the phases of the converter start again to work following the interleaving phase shift of the driving signals PWM.

In conclusion, the controller 30 according to the invention, after having detected a Load Transient, in particular a load release, by means of the Load Transient detector 32 sensitive to the positive derivative of the output voltage signal Vout brings the control signal RAMPA_BOOST to a supply voltage value Vdd and compares it with any control voltage, generating a turn-off control signal LowsideOff of the impulsive type which "resets" the driving signals PWM thanks to the OR architecture 40: in this way, in response to a Load Transient, all the phases arc turned off by the turn-off control signal LowsideOff, reducing the current level made available for the load connected to the terminal OUT.

Advantageously according to the invention, all the power transistors of the phases are simultaneously turned off, both the High Side switches and the Low Side switches.

Moreover, advantageously according to the invention, the recovery of the interleaving driving is automatic, once the Load Transient has ended and the control signal RAMPA_BOOST has gone down again, always thanks to the architecture 40 of the OR type.

**Claims**

1. Method for controlling a converter of the multiphase interleaving type comprising the steps of:

   - detecting when a change of the load applied to an output terminal of said converter occurs;
   - simultaneously turning off all the phases of said converter; and
   - recovering a driving interleaving phase shift for restarting a normal operation of said converter.

2. Control method according to claim 1, wherein said step of simultaneously turning off all the phases of said converter comprises at least one step of turning off High Side switches of said phases.

3. Control method according to claim 1, wherein said step of simultaneously turning off all the phases of said converter comprises at least one step of turning off the High Side and Low Side switches of said phases.

4. Control method according to claim 1, wherein said step of detecting said load change further comprises the steps of:

   - detecting the positive derivative of a voltage signal of said output terminal;
   - generating a detection impulsive signal (LTPULSE) in correspondence with said load change.

5. Control method according to claim 4, further comprising a step of regulating said detection impulsive signal (LTPULSE).

6. Control method according to claim 1, wherein said step of simultaneously turning off all said phases of said converter comprises a step of generating a turn-off control signal (LowsideOff) applied to said phases comparing one between a control voltage signal (PWM) of said phases and an inner voltage signal (COMP) of said converter with a control signal (RAMPA_BOOST), said control signal (RAMPA_BOOST) being brought to a predetermined voltage value in correspondence with said detection impulsive signal (LTPULSE).

**7.** Control method according to claim 6, wherein said predetermined voltage value corresponds to an inner voltage reference value (Vdd) of said converter.

**8.** Control method according to claim 6, wherein said step of recovering said driving interleaving phase shift comprises a comparison step of the OR type between said turn-off control signal (LowsideOff) and said driving signals (PWM) of said phases.

**9.** Controller (30) for a converter of the multiphase interleaving type having at least one input terminal (FD) connected to an output terminal (OUT) of said converter and at least one output terminal (LowsideOff) connected to the phases of said converter, **characterised in that** it comprises at least one load change detector (32) applied to said output terminal (OUT) of said converter, as well as an output comparator (38) having at least one input terminal receiving an inner signal (COMP) of said converter and an output terminal connected to said output terminal (LowsideOff) of said controller (30) and suitable for generating a turn-off control signal (LowsideOff) for said phases of said converter, said turn-off control signal (LowsideOff) forcing the turn-off of said phases of said converter.

**10.** Controller (30) according to claim 9, **characterised in that** said turn-off control signal (LowsideOff) is applied to control terminals of High Side switches of said phases to force the turn-off thereof.

**11.** Controller (30) according to claim 9, **characterised in that** said turn-off control signal (LowsideOff) is applied to control terminals of High Side and Low Side switches of said phases to force the turn-off thereof.

**12.** Controller (30) according to claim 9, **characterised in that** said detector (32) is sensitive to a positive derivative of a voltage signal (Vout) of said output terminal (OUT) of said converter.

**13.** Controller (30) according to claim 9, **characterised in that** it further comprises a flip-flop (34) having a first input terminal (CP) connected to an output terminal (LT_COMP) of said detector (32) and at least one output terminal (Q) connected to a switch (36) having in turn an output terminal connected to at least one input terminal (RAMPA_ BOOST) of said output comparator (38), said flip-flop (34) generating on said output terminal (Q) an impulsive signal (LTPULSE) in correspondence with said load change detected by said detector (32).

**14.** Controller (30) according to claim 13, **characterised in that** it further comprises an oscillator (37) connected to said switch (36) and supplying it with a current signal (Iosc/2), said oscillator (37) and said switch (36) generating a control signal (RAMPA_BOOST) which is brought to a predetermined voltage value (Vdd) in correspondence with said impulsive signal (LTPULSE) and is applied to said output comparator (38).

**15.** Controller (30) according to claim 13, **characterised in that** it further comprises a regulation circuit (35) connected to said detector (32) and to said flip-flop (34).

**16.** Controller (30) according to claim 9, **characterised in that** said detector (32) comprises:

- an input amplifier (A1) connected to a first voltage reference (GND) and having a first input terminal connected to an inner voltage reference (LT_REF), a second input terminal connected to said input terminal (FD) of said controller (30) and an output terminal (LT_INFO) feedback connected to said second input terminal by means of a resistive element (R1); and
- an output amplifier (A2) having a first input terminal connected to said output terminal (LT_INFO) of said input amplifier (A1), a second input terminal receiving a voltage value equal to the sum of said inner voltage reference (LT_REF) and of a triggering voltage (Vref) of said output amplifier (A2) and an output terminal (LT_COMP) where there is said positive derivative of said voltage signal (Vout) of said output terminal (OUT) of said converter.

**17.** Controller (30) according to claim 16, **characterised in that** said input amplifier (A1) is an operational amplifier.

**18.** Controller (30) according to claim 16, **characterised in that** said output amplifier (A2) is a threshold comparator.

**19.** Controller (30) according to claim 16, **characterised in that** it comprises a first generator (G1) of said voltage input reference (LT_REF) directly connected to said first input terminal of said output amplifier (A2) and, by means of a second resistive element (R2) to said first input terminal of said input amplifier (A1).

**20.** Controller (30) according to claim 19, **characterised in that** said first generator (G1) is further connected to a second input terminal (D) of said flip-flop (34).

21. Controller (30) according to claim 15, **characterised in that** said regulation circuit (35) comprises a delay element (DL) inserted between said output terminal (LT_COMP) of said detector (32) and an inverter (INV), in turn connected to a control terminal (CD) of said flip-flop (34) and suitable for regulating said impulsive signal (LTPULSE).

22. Controller (30) according to claim 14, **characterised in that** said switch (36) comprises a transistor (M1) inserted between a second voltage reference (Vdd) and said oscillator (37) and having a control terminal connected to said flip-flop (34).

23. Controller (30) according to claim 22, **characterised in that** said transistor (M1) has a first conduction terminal connected to said second voltage reference (Vdd) and a second conduction terminal connected to a second generator (G4), in turn connected to said first voltage reference (GND), and a control terminal connected to said at least one output terminal (Q) of said flip-flop (34).

24. Controller (30) according to claim 23, **characterised in that** said switch (36) further comprises a capacitor (Cboost) inserted in parallel to said second generator (G4), the interconnection point of said transistor (M1) and said capacitor (Cboost) being connected to a further input terminal of said output capacitor (38).

25. Controller (30) according to claim 24, **characterised in that** said capacitor (Cboost) is sized as a capacitor (Cosc) used for generating ramp control voltage signals of said phases of said converter and **in that** said second generator (G4) supplies a current value (Iosc/2) equal to half of a current value as used for generating said ramp control voltage signals.

26. Controller (30) according to claim 14, **characterised in that** it further comprises a driving architecture of the OR type (40) comprising a plurality of driving sub-systems (41), each including at least one threshold comparator (TC) having a first input terminal receiving a ramp control voltage signal of a corresponding phase of said converter, a second input terminal receiving a control voltage signal (VCONTROLLO) and an output terminal suitable for supplying a first input terminal (A) of a logic gate (LG) of the OR type with a signal of the PWM type, the gate having a second input terminal (B) receiving said turn-off control signal (LowsideOff) and an output terminal (Y) suitable for supplying a driving signal (PWM_COMP) of said corresponding phase.

27. Controller (30) according to claim 26, **characterised in that** said control signal (RAMPA_BOOST) generated by said switch (36) is a ramp signal having slope equal to half of said ramp control voltage signals of said phases.

FIG. 1A
PRIOR ART

FIG. 1B
PRIOR ART

FIG. 2
PRIOR ART

FIG. 3A
PRIOR ART

FIG. 3B
PRIOR ART

EP 1 826 894 A1

FIG. 3C
PRIOR ART

EP 1 826 894 A1

FIG. 4A
PRIOR ART

FIG. 4B
PRIOR ART

FIG. 4C
PRIOR ART

FIG. 4D
PRIOR ART

FIG. 4E
PRIOR ART

FIG. 5

FIG. 6

EP 1 826 894 A1

FIG. 7

EP 1 826 894 A1

FIG. 8A

FIG. 8B

FIG. 8C

EP 1 826 894 A1

FIG. 9

**European Patent
Office**

**EUROPEAN SEARCH REPORT**

Application Number

EP 06 42 5133

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | US 2003/178975 A1 (SCHUELLEIN GEORGE ET AL) 25 September 2003 (2003-09-25) | 1-3 | INV. H02M3/158 |
| Y | * column 6, lines 45-51; figure 13 * * column 7, line 5 - line 53 * | 3,11 | |
| X | US 5 870 296 A (SCHAFFER ET AL) 9 February 1999 (1999-02-09) | 1,2, 4-10,12, 16-18 | |
| Y | * column 7, lines 30-49; figures 2a-2d * | 3,11 | |
| X | US 2004/095104 A1 (BROOKS STEVEN W) 20 May 2004 (2004-05-20) * abstract; figures 4,5 * | 1,2,9,10 | |
| X | WO 02/19507 A (SYNQOR, INC) 7 March 2002 (2002-03-07) * page 4, lines 37-45; figures 1,3 * | 1,2,9,10 | |

TECHNICAL FIELDS
SEARCHED      (IPC)

H02M

The present search report has been drawn up for all claims

| Place of search | Date of completion of the search | Examiner |
|---|---|---|
| The Hague | 12 September 2006 | Imbernon, Lisa |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 1 826 894 A1**

ANNEX TO THE EUROPEAN SEARCH REPORT
ON EUROPEAN PATENT APPLICATION NO.

EP 06 42 5133

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2006

| Patent document cited in search report | | Publication date | Patent family member(s) | | Publication date |
|---|---|---|---|---|---|
| US 2003178975 | A1 | 25-09-2003 | AU 2003220435 A1 | | 13-10-2003 |
| | | | CA 2479754 A1 | | 09-10-2003 |
| | | | CN 1639657 A | | 13-07-2005 |
| | | | EP 1490743 A1 | | 29-12-2004 |
| | | | JP 2005520475 T | | 07-07-2005 |
| | | | TW 591867 B | | 11-06-2004 |
| | | | WO 03083596 A1 | | 09-10-2003 |
| | | | US 2005007081 A1 | | 13-01-2005 |
| US 5870296 | A | 09-02-1999 | EP 1023767 A1 | | 02-08-2000 |
| | | | JP 2001520500 T | | 30-10-2001 |
| | | | TW 451547 B | | 21-08-2001 |
| | | | WO 9919975 A1 | | 22-04-1999 |
| US 2004095104 | A1 | 20-05-2004 | NONE | | |
| WO 0219507 | A | 07-03-2002 | AU 8506401 A | | 13-03-2002 |
| | | | CN 1466808 A | | 07-01-2004 |
| | | | EP 1336238 A2 | | 20-08-2003 |
| | | | JP 2004507999 T | | 11-03-2004 |

EPO FORM P0459

For more details about this annex : see Official Journal of the European Patent Office, No. 12/82

26

**REFERENCES CITED IN THE DESCRIPTION**

**Patent documents cited in the description**

- US 6806689 B